# EUROPÄISCHE PATENTSCHRIFT

(11) **EP 2 694 836 B1**
(45) Veröffentlichungstag und Bekanntmachung des Hinweises auf die Patenterteilung: **28.02.2018**
(21) Anmeldenummer: 11815695.9
(22) Anmeldetag: 30.12.2011
(51) Int. Cl.: F16F 1/32, F16F 15/073, F16F 15/02

(54) **VORRICHTUNG ZUR ÜBERTRAGUNG ODER ENTKOPPLUNG VON MECHANISCHEN SCHWINGUNGEN**
DEVICE FOR TRANSMITTING OR DECOUPLING MECHANICAL VIBRATIONS
DISPOSITIF POUR LA TRANSMISSION OU LE DÉCOUPLAGE DE VIBRATIONS MÉCANIQUES

(30) Priorität: 01.04.2011 DE 102011015798
(43) Veröffentlichungstag der Anmeldung: 12.02.2014
(73) Patentinhaber: Fraunhofer-Gesellschaft zur Förderung der angewandten Forschung e.V., 80686 München (DE)
(72) Erfinder: KAAL, William, 64293 Darmstadt (DE); MELZ, Tobias, 64285 Darmstadt (DE); SEIPEL, Björn, 61197 Florstadt (DE); KRAUS, Roman, 61184 Karben (DE); HANSMANN, Jan, 64287 Darmstadt (DE)
(74) Vertreter: Rösler, Uwe
(86) Internationale Anmeldenummer: PCT/EP2011/006616
(87) Internationale Veröffentlichungsnummer: WO 2012/130268

(56) Entgegenhaltungen:
- US-A- 2 922 669
- US-A- 4 840 083
- US-A1- 2005 184 601
- US-A1- 2007 125 930

## Beschreibung

### Technisches Gebiet

Die Erfindung bezieht sich auf eine Vorrichtung zur Übertragung oder Entkopplung von mechanischen Schwingungen, mit einer ersten und einer zweiten Komponente, die über ein Koppelelement miteinander verbunden sind, das über eine variabel einstellbare Steifigkeit längs wenigstens einer Wirkrichtung verfügt, längs der zumindest eine Komponente schwingend gelagert ist.

### Stand der Technik

Sind zwei Komponenten über ein mechanisches Koppelelement, bspw. über eine bidirektional längs einer Raumrichtung auslenkbaren Feder, miteinander verbunden, so kommt es bei Schwingungsanregung einer Komponente zu einer Schwingungsübertragung über das Koppelelement auf die andere Komponente. Durch Abstimmung der Steifigkeit des Koppelelementes lässt sich die Schwingungsübertragung zwischen beiden Komponenten beeinflussen. Im Falle einer geringen Steifigkeit des Koppelelementes lässt sich die Schwingungsübertragung reduzieren.

Gilt es bspw. eine Maschinenanordnung auf einem Maschinenfundament möglichst schwingungsarm zu lagern, so bedient man sich eines Koppelelementes, das über eine fest vorgegebene Steifigkeit bzw. Eigenelastizität verfügt. Nimmt die Maschine jedoch in Abhängigkeit des Betriebszustandes unterschiedliche Schwingungszustände an, so kann es dazu kommen, dass die Maschine in der Eigenfrequenz des sich aus dem Koppelelement und der Maschine zusammensetzenden Systems betrieben wird. In diesem resonanten Betriebszustand treten ausgeprägte Schwingungsamplituden auf, die zu einer erhöhten Lärmbelästigung sowie zu einer erhöhten mechanischen Belastung des Gesamtsystems führen können. Üblicherweise werden der Maschinenbetrieb und die Steifigkeit der Koppelelemente derart aufeinander abgestimmt, um den Resonanzfall zu vermeiden oder nur kurzzeitig beim Hochfahren der Maschine zu durchfahren.

Die geschilderte Möglichkeit zur Einflussnahme auf die Schwingungsübertragung zwischen zwei Komponenten mittels eines Koppelelementes kann neben der erwähnten schwingungsarmen Lagerung zweier Komponenten relativ zueinander auch zur gezielten Schwingungsberuhigung bzw. -reduzierung einer schwingenden Komponente genutzt werden.

In diesem Fall wird in an sich bekannter Weise ein sog. Schwingungstilger mit der schwingenden Komponente verbunden. Hierzu wird eine Masse, sogenannte Tilgermasse, über ein Koppelelement mit der schwingenden Komponente verbunden. Durch die Tilgermasse sowie die Steifigkeit des Koppelelementes ist die Resonanzfrequenz bzw. Abstimm- oder Tilgerfrequenz des Schwingungstilgers einstellbar, wodurch die Schwingungen der schwingungszudämpfenden Komponente in einem schmalen Frequenzband um die Abstimmfrequenz des Schwingungstilgers herum kompensiert werden. Bei wechselnden Schwingungszuständen innerhalb der schwingungszudämpfenden Komponente ist es darüber hinaus vorteilhaft, die Abstimmfrequenz des Schwingungstilgers an die jeweils momentane Anregungsfrequenz anzupassen, um auf diese Weise den Wirkbereich des Schwingungstilgers variabel auszubilden.

Zu beiden der vorstehend genannten Anwendungsfällen für eine gezielte Einflussnahme auf die Schwingungsübertragung zwischen zwei Komponenten ist eine Reihe von unterschiedlich ausgebildeten Koppelelementen bekannt, mit denen es möglich ist, durch Beeinflussung der Steifigkeit bzw. Elastizität eine Schwingungsreduzierung bzw. vollständige Schwingungsentkopplung zwischen zwei Komponenten trotz sich ändernden Schwingungszuständen variabel anzupassen.

Als Beispiel für eine Vorrichtung zur schwingungsarmen Lagerung einer Komponente gegenüber einem Fundament mit einer variabel einstellbaren Federsteifigkeit zwischen Komponente und Fundament geht aus einem Beitrag von Bonello, Philip et al, "Vibration control using an adaptive tuned vibration absorber with a variable curvature stiffness element", In: Smart Materials ans Structures 14 (5), S. 1055 - 1065, (2005), eine Lagereinheit hervor, die zwischen einer oberen Auflage- und unteren Lagerfläche zwei getrennt bogenförmig ausgebildete Federelemente einspannt, deren Steifigkeit durch Änderung der Vorbiegung der jeweiligen Federelemente mit Hilfe einer Stelleinheit veränderbar ist.

Aus der DE 10 2005 043 429 A1 ist eine Vorrichtung zur Schwingungsentkopplung zu entnehmen, die innerhalb einer Gehäusestruktur eine vollständig umlaufend eingespannte Flächenmembran aufweist, an der ein stabförmiges mit orthogonaler Stablängserstreckung zur Flächenmembran, lastaufnehmendes Mittel angebracht ist, das bspw. mit einer schwingenden Komponente verbunden ist. Um die Flächenelastizität der Membran zu beeinflussen, ist auf dieser wenigstens ein aus Wandlermaterial bestehender Aktor appliziert, der die Verformbarkeit der Flächenmembran zu beeinflussen vermag.

Auch für die Realisierung von Schwingungstilgern sind Lösungsansätze mit variabel durchstimmbaren Steifigkeitskennlinien bekannt. Eine bekannte Ausführungsform für einen Schwingungstilger besteht aus einem mittig abgestützten Federbalken, dessen mittige Abstützung an einer schwingungszudämpfenden Komponente angebracht ist. An beiden sich gegenüberliegenden, freien Federbalkenenden ist jeweils eine Tilgermasse angebracht, die bei Erreichen der Tilgerfrequenz mit jeweils maximalen Amplituden relativ zur mittigen Abstützung schwingen. Zur Beeinflussung der Tilgerfrequenz sind beidseitig zur mittigen Abstützung längs des Federbalkens Piezoaktoren appliziert, wodurch Einfluss auf die Flächenelastizität des Federbalkens genommen werden kann. Eine alternative Möglichkeit zur Beeinflussung der Tilgerfrequenz eines vorstehend bezeichneten Aufbaus für einen Schwingungstilger ist in der WO 2008/131740 A1 zu entnehmen. In diesem Fall werden über ein mechanisches Betätigungsmittel der Abstand der beidseitig längs des Federbalkens relativ zur mittigen Abstützung gelagerten Tilgermassen verändert, wodurch sich die freien Balkenlängen ändern und damit die Tilgerfrequenz.

### Darstellung der Erfindung

Der Erfindung liegt die Aufgabe zugrunde, eine Vorrichtung zur Übertragung oder Entkopplung von mechanischen Schwingungen, mit einer ersten und einer zweiten Komponente die über ein Koppelelement verbunden sind, das über eine variabel einstellbare Steifigkeit längs wenigstens einer Wirkrichtung verfügt, längs der zumindest eine Komponente schwingend gelagert ist, derart weiterzubilden, dass der Einsatz der Vorrichtung sowohl als Lagerelement als auch als Schwingungstilger ohne konzeptionelle Modifikationen vornehmen zu müssen möglich ist. Die Vorrichtung soll robust und möglichst kompakt ausgebildet sein, so dass ihr Einsatz auch an schwer zugänglichen Bereichen möglich wird. Insbesondere soll eine Möglichkeit geschaffen werden, mit der ein möglichst großer Verstellbereich hinsichtlich der Steifigkeit des Koppelelementes erreicht wird, wobei der Verstellvorgang möglichst kurzfristig, sowohl hinsichtlich einer abrupten Steifigkeitserhöhung sowie auch einer abrupten Steifigkeitsreduzierung.

Die lösungsgemäße Vorrichtung soll darüber hinaus modular nach dem Baukastenprinzip erweiterbar sein.

Die lösungsgemäße Vorrichtung ist Gegenstand des Anspruches 1. Die Vorrichtung in vorteilhafterweise weiterbildende Merkmale sind Gegenstand der Unteransprüche sowie der weiteren Beschreibung unter Bezugnahme auf die Ausführungsbeispiele zu entnehmen.

Eine gattungsgemäße Vorrichtung zur Übertragung oder Entkopplung von mechanischen Schwingungen nach den Merkmalen des Oberbegriffes des Anspruches 1 ist lösungsgemäß dadurch ausgebildet, dass das Koppelelement ein Flächenelement mit einer Flächenober- und -unterseite sowie einer Flächenlängserstreckung ist, das formstabil in und elastisch quer zur Flächenlängserstreckung ist. In einer bevorzugten Ausführungsform ist das Flächenelement ringscheibenförmig ausgebildet und dient mit seinen beiden Ringoberflächen als Auflageflächen für die jeweils über das Flächenelement in Wirkverbindung miteinander tretenden Komponenten. Hierbei weisen beide Komponenten jeweils n ≥ 2, vorzugsweise ≥ 3 Kontaktmittel auf, über die die erste sowie auch die zweite Komponente mit der Flächenunterseite und/oder Flächenoberseite in Berührung treten. Beide Komponenten sind vorzugsweise zum als Flächenelement ausgebildeten Koppelelement gegenüberliegend angeordnet. Beide Komponenten sind zudem relativ zueinander um eine orthogonal zur Flächenlängserstreckung orientierten Raumachse, die mit der wenigstens einen Wirkrichtung, längs der zumindest eine Komponente schwingend gelagert ist, zusammenfällt, drehbar angeordnet.

Durch die Verdrehung wenigstens einer Komponente relativ zur zweiten werden die Auflagebereiche, an denen die Kontaktmittel beider Komponenten mit dem als Flächenelement ausgebildeten Koppelelement in Berührung treten verändert, wodurch sich gleichsam die in axialer Wirkrichtung wirksame Flächenelastizität verändert.

Befinden sich bspw. die Kontaktmittel beider Komponenten in oder in weitgehender Überlappung in axialer Projektion auf das Flächenelement, so ist die wirksame Flächensteifigkeit des Flächenelementes in Bezug auf die über das Koppelelement in Wirkverbindung tretenden beiden Komponenten am größten. In diesem Fall liegen die Kontaktmittel beider Komponenten zumindest weitgehend direkt axial gegenüber, lediglich getrennt durch das Dickenmaß des Flächenelementes, so dass das Flächenelement keinen flächenelastischen Beitrag zur mechanischen Kopplung beider Komponenten liefern kann.

Gelangen die Auflagepunkte der Kontaktmittel beider Komponenten durch relative Verdrehung in eine räumliche Verteilung um die Raumachse mit jeweils maximalen gegenseitigen Abstandswinkeln, so reduziert sich die axial wirksame Flächensteifigkeit auf ein Minimum.

Zur Variation der axial wirksamen Flächensteifigkeit des Flächenelementes bedarf es daher lediglich einer Verdrehung wenigstens einer Komponente relativ zur anderen, die entweder manuell oder aktorisch unterstützt initiiert werden kann. Der Verdrehvorgang kann langsam oder abrupt, d. h. ohne technisch relevante Zeitverzögerung realisiert werden, bspw. mit einem geeignet ausgewählten Elektromotor. Selbstverständlich sind auch alternative Antriebstechniken denkbar, bspw. mittels Stellaktoren unter Einsatz von Wandlermaterialien, bspw. Piezo-Wanderwellenmotor, Inchwormotor, Verwendung von Formgedächtnislegierungen, um nur einige Möglichkeiten zu nennen.

In besonders vorteilhafter Weise lässt sich die lösungsgemäße Vorrichtung in kompakter Bauform realisieren, indem bspw. die über das Koppelelement in Wirkverbindung tretenden Komponenten in Art eines Dosenbodens und Dosendeckels ausgebildet sind, die einen inneren Bauraum umfassen, in dem das als Flächenelement ausgebildete Koppelement eingebracht ist. Auch bietet der innere Baurum genügend Platz um zumindest eine Antriebsaktorik zum Verdrehen beider Komponenten relativ zueinander unterzubringen. Besonders vorteilhaft ist eine nicht nach Außen in Erscheinung tretende Bauformänderung bei Verdrehung beider Komponenten relativ zueinander. Dies ergibt sich bei geeigneter Raumformgestaltung der beiden Komponenten, wie im Weiteren beschrieben wird. Durch die räumlich kompakte und robuste Ausgestaltungsmöglichkeit und die beliebige Skalierbarkeit der Vorrichtung, ist die Vorrichtung für jeden denkbaren Einsatzort geeignet, unabhängig von der räumlichen Beschaffenheit oder von mechanischen, thermischen, chemischen oder sonstigen Umgebungsbedingungen vor Ort.

Für den Einsatz als schwingungsentkoppelndes Lager zwischen zwei Körpern weisen beide Komponenten, die vorzugsweise als dosenartige Gehäusehälften ausgebildet sind, jeweils eine den inneren Bauraum abgewandte, nach Außen gerichtete Kontaktfläche auf, über die beide Komponenten jeweils mit den schwingungszuentkoppelnden Körpern in Verbindung gebracht werden können. Im einfachsten Fall berührt die als Gehäuseboden ausgebildete Komponente die Oberfläche eines stabilen Fundamentes, wohingegen auf der Deckeloberseite der oberen Komponente der schwingende Körper gelagert wird.

In Funktion als Schwingungstilger ist die lösungsgemäße Vorrichtung mit ihrer vorzugsweise in Art eines Dosenbodens ausgebildeten Komponente mit dem schwingungszudämpfenden Körper/Systems verbunden, wohingegen die dosendeckelartig ausgebildete Komponente selbst als Tilgermasse ausgebildet oder mit einer Tilgermasse verbunden ist.

Die Verbindung bzw. Fügung beider Komponenten mit dem als Flächenelement ausgebildeten Koppelelement über ihre jeweiligen Koppelmittel kann verschiedenartig ausgeführt sein.

In einer einfachsten Ausführungsform befindet sich die erste Komponente in Ausrichtung zum Gravitationsvektor vertikal unter der zweiten Komponente, so dass das flächenelementartig ausgebildete Koppelelement auf den Kontaktmitteln der ersten Komponente lediglich lose aufliegt. Die Koppelmittel sind vorzugsweise Stangen- oder streifenförmig ausgebildet und treten mit der Flächenunterseite des Flächenelementes in Kontakt längs jeweils einer Berührlinie oder- streifens. Das vorzugsweise ringförmig ausgebildete Flächenelement verfügt über eine zentrale Öffnung, die von einer mittigen Raumachse durchsetzt ist. Zu dieser Raumachse sind die stangen- oder streifenförmigen Kontaktmitte jeweils mit radialer Orientierung sowie mit gleich verteilten Winkelabständen um die Raumachse mit dem ersten Koppelelement raumfest verbunden. Grundsätzlich sei zur Ausbildung des Flächenelementes angemerkt, dass das Flächenelement auch ohne Öffnung ausgebildet sein kann, bspw. membranartig, jedoch lässt sich ein Flächenelement mit mittiger Öffnung oder zumindest mit einer mittigen Materialschwächung in einer vorbestimmten Weise orthogonal zur Flächenlängserstreckung deformieren. Daher wird im Folgenden von einem ringförmig ausgebildeten Flächenelement ausgegangen.

An der Flächenelementoberseite des ringförmig ausgebildeten Flächenelementes liegen die gleichfalls stab- oder streifenförmig ausgebildeten Kontaktmittel der oberen, zweiten Komponente lose auf. In gleicher Weise, wie bei der ersten Komponente sind die Kontaktmittel der zweiten Komponente raumfest mit der zweiten Komponente verbunden. Die Anzahl der Kontaktmittel pro Komponenten ist jeweils gleich.

In einem einfachen bevorzugten Ausführungsbeispiel sind bspw. n=3 stab- oder streifenförmig ausgebildete Koppelmittel pro Komponente vorgesehen, die ihrerseits gleich verteilt um die Raumachse angeordnet sind, d.h. die Kontaktmitteln pro Komponenten schliessen jeweils einen gegenseitigen Abstandswinkel α mit α = 360°/(n=3) von 120° ein. Wählt man jeweils n Kontaktmittel pro Komponente, so weisen diese einen Abstandswinkel α von α = 360°/n auf.

Im vorstehenden Fall befinden sich die jeweils 3 Kontaktmittel pro Komponente in der Stellung maximaler Steifigkeit jeweils paarweise in axialer Projektion auf das ringförmige Koppelelement in Überdeckung oder schließen jeweils paarweise lediglich einen sehr kleinen Winkel β ein. Wird die obere, zweite Komponente relativ zur unteren, ersten Komponente in die Stellung maximaler Flächenelastizität bzw. geringster axialer Flächensteifigkeit gedreht, so sind die Berührbereiche aller sechs Kontaktmittel mit einem maximalen gegenseitigen Winkelabstand β mit β = 360/(2n) und n= 3, d.h. β = 60° um die Raumachse verteilt. Da die Kontaktmittel lediglich lose auf der Flächenober- und Flächenunterseite des ringförmigen Koppelelementes aufliegen ist ein Verdrehen beider Komponenten ohne weiteres möglich. Durch die lose Fügung der Kontaktmittel sind lediglich Druckkräfte auf das ringförmige Koppelelement pro Komponente übertragbar.

Selbstverständlich sind Ausführungen für die stift- oder streifenförmig ausgebildeten Kontaktmittel denkbar, bei denen die Kontaktmittel jeweils unter Ausübung einer biaxialen Klemmkraft auf die Flächenober- und -unterseite des Flächenelementes einwirken. Eine derartige Klemmkraft kann über entsprechende Spann- und Fixiervorrichtungen veränderbar eingestellt werden, bis hin zu einer lösbaren Fixierung. Auf diese Weise ist es möglich pro Komponente biaxial gerichtete Kräfte auf das Flächenelement auszuüben. Eine mögliche Realisierungsform sieht einen spangenartigen Gesamtumgriff des ringförmigen Koppelelementes pro Kontaktmittel vor. Zur Illustration eines derartigen Klemmmechanismus sei auf ein Ausführungsbeispiel verwiesen, das im Weiteren in Verbindung mit den Zeichnungen beschrieben wird.

Das als Flächenelement ausgebildete Koppelelement ist vorzugsweise eine Kreisschreibe bzw. kreisringförmig ausgebildet, selbstverständlich können auch von der Kreisringform abweichende Ringformen gewählt werden. Typischerweise besitzen Kreisringscheiben einen rechteckförmigen Scheibenquerschnitt mit einer ebenen Flächenober- und -unterseite. Gleichsam kann das Koppefefement auch aus einem zu einem Ring geformten Draht mit einem kreisrunden Drahtquerschnitt bestehen. So weist auch die Drahtform, wenn auch gegenüber der Kreisringform sehr viel kleinere aber dennoch messbar große Flächenober- und -unterseite auf, über die die Kontaktmittel der beiden Komponenten in entsprechende Wirkverbindung treten können.

Nicht notwendigerweise ist es erforderlich, dass das Koppelelement eine runde Außenkontur besitzt, selbstverständlich sind auch eckige oder beliebig geformte Umfangränder des Flächenelementes denkbar. Das Flächenelement ist jedoch mit einer mittig angeordneten Öffnung zu versehen, um eine gewünschte Flächenelastizität zu erhalten.

Das Flachmaterial, aus dem typischerweise das Flächenelement gefertigt ist, ist für den Einsatzfall der Vorrichtung und den wirkenden Lagerkräften individuelle zu wählen. Besonders geeignet sind metallische Materialien, bspw. Flachstahl. Auch können Verbundwerkstoffe geeignet sein, die schichtförmig aufgebaut sind. Für den Fall einer aktiven Einflussnahme auf die durch das Flächenelement vorgegebenen Flächensteifigkeit bietet es sich an, an wenigstens einem Oberflächenbereich des Flächenelementes einen aus Wandlermaterial, bspw. aus Piezokeramik, bestehenden Aktor sowie gegebenenfalls Sensor anzubringen oder diesen in das Flächenelement zu integrieren.

In einer weiteren Ausführungsform ist das Flächenelement nicht einstückig, sondern geteilt ausgeführt, bspw. ausgehend von einem ring- oder ringscheibenförmigen Flächenelement ist dieses durch jeweils radiale Trennschnitte in zwei, drei oder mehr Ring- oder Ringscheibensektoren unterteilt, deren stirnseitige Trennflächen jeweils lose gegenüberliegen, sodass die einzelnen Ring- oder Ringscheibensektoren die Form eines vollständigen ring- oder ringscheibenförmigen Flächenelement ergeben. Jeweils eine Komponente, bspw. die erste Komponente ist jeweils fest mit allen Ring- oder Ringscheibensektoren derart verbunden, so dass die separaten Ring- oder Ringscheibensektoren jeweils an einer nahe an einer Trennfläche befindlichen Kontaktstelle über die Kontaktmittel mit der ersten Komponente fest gefügt sind. Die zweite Komponente hingegen steht über ihre Kontaktmittel längs der einseitig mit der ersten Komponente fest verbundenen Ring- oder Ringscheibensektoren in Schleifkontakt. Eine derartige Ausführungsform verfügt über einen weitaus größeren Bereich an erzielbarer Flächenelastizität, als im Falle einstückig ausgebildeter Flächenelemente. Weitere Erläuterungen hierzu sind im Weiteren unter Bezugnahme auf die betreffende Illustration zu entnehmen.

Besonders vorteilhafte Ausbildungsformen der Lösungsgemäßen Vorrichtung werden im Weiteren unter Bezugnahme auf die Ausführungsbeispiele beschrieben.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: perspektivische Gesamtdarstellung eines lösungsgemäßen Ausführungsbeispiels zur Übertragung oder Entkopplung von mechanischen Schwingungen,
- Fig. 2a, b: Querschnitte von auf der Flächenober- oder -unterseite des Flächenelementes aufliegenden Kontaktmittel,
- Fig. 3a, b: ringförmig ausgebildetes Koppelelement
- Fig. 4: Ausführungsbeispiel für einen Schwingungstilger,
- Fig. 5: Ausführungsbeispiel zur Übertragung oder Entkopplung von mechanischen Schwingungen mit unterteiltem Flächenelement und
- Fig. 6: Ausführungsbeispiel für eine Vorrichtung zur Übertragung oder Entkopplung mechanischer Schwingungen zwischen zwei Komponenten.

### Wege zur Ausführung der Erfindung, gewerbliche Verwendbarkeit

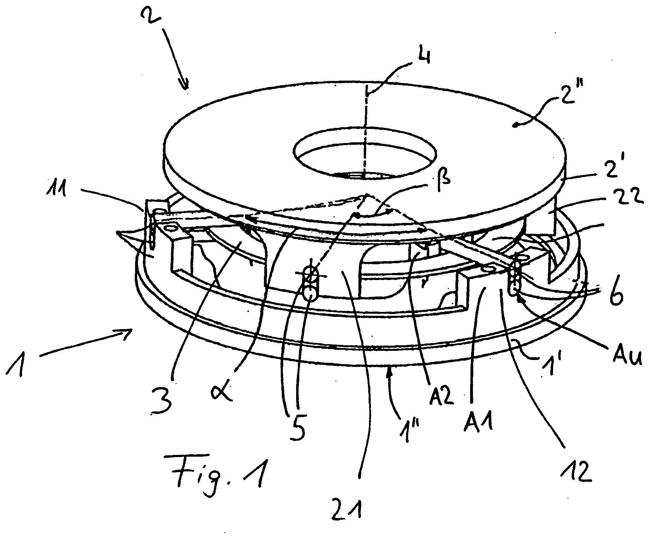

Figur 1 zeigt in perspektivischer Darstellung eine Vorrichtung zur Übertragung oder Entkopplung von mechanischen Schwingungen mit einer ersten Komponente 1 sowie einer zweiten Komponente 2, die über ein Koppelelement 3 verbunden sind, das über eine variabel einstellbare Steifigkeit längs wenigstens einer Wirkrichtung verfügt in dem gezeigten Ausführungsbeispiel längs der eingetragenen Raumachse 4 orientiert ist.

In dem illustrierten Ausführungsbeispiel weisen die erste und zweite Komponente 1, 2 kreisringförmige Gehäuseplatten 1', 2' auf, deren jeweils nach außen orientierte Seite jeweils eine Kontaktfläche 1", 2" darstellt, über die die untere Komponente 1 bspw. auf ein festes Fundament (nicht dargestellt) und die obere Komponente 2 mit einem zumindest in Wirkrichtung 4 schwingend gelagerten Körper (nicht dargestellt) fest gefügt werden kann. In dieser Konstellation eignet sich die lösungsgemäße Vorrichtung als schwingungsdämpfendes Lager.

An den sich zugewandten Seiten der Gehäuseplatten 1', 2' weisen beide Komponenten 1, 2 jeweils drei in Umfangsrichtung um die Raumachse 4 gleich verteilt angeordnete Aufnahmestrukturen 11, 12 (13 nicht dargestellt) sowie 21, 22 (23 nicht dargestellt) auf. Jede der einzelnen Aufnahmestrukturen weist eine an der ringförmigen Gehäuseplatte radial außen sowie radial innen angebrachte Aufnahmeschulter A1, A2 auf, in denen jeweils eine nutförmige Ausnehmung Au zur Aufnahme zweier Kontaktmittel 6 eingebracht ist, die stangenförmig ausgebildet sind und in radialer Erstreckung längs zur Raumachse 4 sich jeweils in den nutförmigen Ausnehmungen Au der radial innen und radial außen liegenden Aufnahmeschultern A1, A2 abstützen. Zwischen den jeweils zwei pro Aufnahmestruktur 11, 12, 13 sowie 21, 22, 23 fixierten Kontaktmittel 6 ist das ringförmig ausgebildete Koppelelement 3 gelagert, das ausschließlich mit den Koppelmitteln der Komponenten 1, 2 in Kontakt tritt bzw. von diesen gehalten werden. Somit schließen die jeweils drei Kontaktmittel 6 pro Komponente, die jeweils gleichverteilt um die Raumachse 4 angebracht sind, einen gegenseitigen Abstandswinkel α von 120° ein.

Die stiftartig ausgebildeten Kontaktmittel 6 können in unterschiedlicher Weise mit dem ringartig ausgebildeten Koppelelement 3 in Wirkverbindung treten. Beispielsweise können die mit der ersten Komponente 1 verbundenen Kontaktmittel 6 eine feste, Klemmkraft unterstützte Fügeverbindung mit dem ringartig ausgebildeten Koppelelement 3 eingehen, wohingegen die mit der zweiten Komponente 2 verbundenen Kontaktmittel 5 eine lose, gleitfähige Fügeverbindung mit dem ringartig ausgebildeten Koppelelement 3 eingehen. Auf diese Weise ist es möglich, die Komponente 2 relativ zur Komponente 1 um die Raumachse 4 zu verdrehen.

In einer weiteren Ausführungsvariante können sämtliche oder lediglich die einer Komponente zugeordneten Koppelmittel lösbar fest mit dem ringartig ausgebildeten Koppelelement 3 in Wirkverbindung gebracht werden.

Unabhängig von der konstruktiven Ausgestaltung der Fügeverbindung zwischen den Koppelelementen 1, 2 und dem ringartig ausgebildeten Koppelelement 3 gilt es einerseits dafür zu sorgen, dass die relative Drehbarkeit der Komponente 1 gegenüber der Komponente 2 für eine variable Einstellung der wirksamen Steifigkeit durch das ringförmig ausgebildete Koppelelement 3 gewährleistet ist, andererseits jedoch eine ungewollt selbständig Verdrehung beider Komponenten 1, 2 relativ zueinander während des schwingungsdämpfenden Einsatzes auszuschließen ist. Auch führen beide Komponenten 1, 2 aufgrund ihrer gegenseitigen Lagerung über das Koppelelement ausschließlich Relativschwingungsbewegungen längs der Wirkrichtung 4, d.h. orthogonal zur Ebene des ringförmig ausgebildeten Koppelelementes 3, aus.

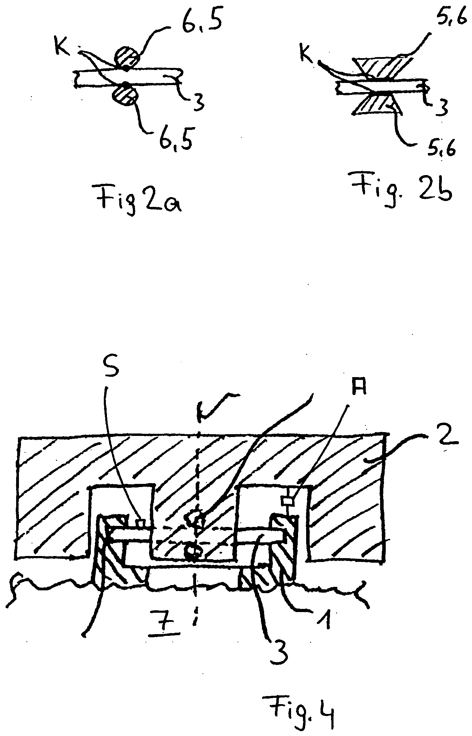

Figur 2a zeigt einen Querschnitt durch zwei stabförmig ausgebildete Kontaktmittel 5, 6, die jeweils einen runden Stabquerschnitt aufweisen und mit dem Koppelelement 3 jeweils einen linienförmigen Kontakt K besitzen. In einer anderen Ausführungsvariante gemäß Figur 2b sind die Kontaktmittel 5, 6 mit einem trapezförmig ausgebildeten Querschnitt versehen, durch den die Kontaktmittel 5, 6 mit dem Koppelelement 3 über einen streifenförmigen Flächenbereich K in Kontakt treten. Durch die jeweilige Ausbildung des Kontaktmittels kann ein Einfluss auf die wirksame Flächensteifigkeit des Koppelelementes 3 genommen werden.

In der Darstellung gemäß Figur 1 sind die erste und zweite Komponente 1, 2 derart um die Raumachse 4 relativ zueinander verdreht, so dass die insgesamt sechs Kontaktmittel 5, 6 einen gegenseitigen Abstandswinkel β von 60° einschliessen, d.h. in dieser Stellung ist der gegenseitige Abstandswinkel β maximal und die axial zur Raumachse 4 wirkende Flächensteifigkeit des ringförmigen Koppelelementes 3 minimal.

Durch die konstruktive Ausgestaltung der in Figur 1 dargestellten Komponenten 1 und 2 schließen diese einen innenliegenden Bauraum ein, in dem das ringförmig ausgebildete Koppelelement 3 weitgehend mechanisch geschützt gegenüber äußeren Einwirkungen gelagert ist. In Anbetracht dieser Ausführungsform, die eine mit einer geschlossenen Dose vergleichbare Raumform besitzt, d.h. die Komponente 1 entspricht einem unteren und die Komponente 2 einem oberen Dosenteil, verändert sich der Bauraum bei einer Veränderung der wirksamen Axialsteifigkeit des ringförmigen Koppelelementes 3, d.h. bei Verdrehen beider Komponenten 1, 2 in keiner Weise. Dies spiegelt den Vorteil einer vielseitigen Einsatzweise sowie Positionierungsmöglichkeit wieder, selbst an unzugänglichen Orten, an denen nicht viel Platz vorhanden ist.

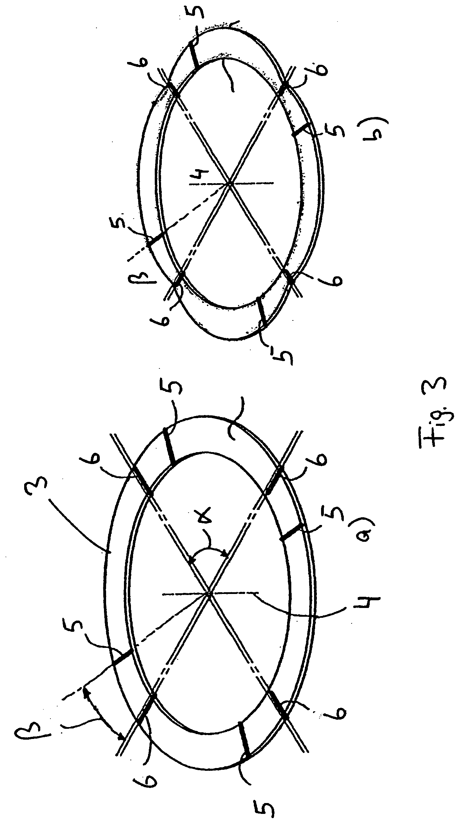

In Figur 3a ein ringförmig ausgebildetes Koppelelement 3 in Alleinstellung gezeigt. Ferner sind in Ringumfangsrichtung jene Bereiche markiert, an denen jeweils vier (!) Kontaktmittel 6 (nicht wie in Fig. 1) der Komponente 1 sowie vier (!) Kontaktmittel 5 der Komponente 2 mit dem ringförmig ausgebildeten Koppelelement 3 jeweils in linienhafte Berührung treten. In dem gezeigten Fall sind die Kontaktmittel pro Komponenten um jeweils α = 90° um die Raumachse 4 fest an der jeweiligen Komponente verteilt angeordnet.

Es sei angenommen, dass Komponente 1 über ihre Koppelmittel 6 in festem Kontakt mit dem Koppelelement 3 treten. Hingegen lässt sich die Komponente 2 relativ zur Komponente 1 um die Raumachse 4 verdrehen, so dass der Abstandswinkel β, der von den Kontaktstellen der Kontaktmittel 5 bezüglich der Komponente 2 und jenen der Koppelmittel 6 bzgl. der Komponente 1 eingeschlossen wird, in einem Bereich von 0° ≤ β ≤ 360/2n = 45° (mit n = 4) variiert werden kann.

Die zur Raumachse 4 wirksame Steifigkeit des ringartigen Koppelelementes 3 ergibt sich aus der Flexibilität des ringartig ausgebildeten Koppelelementes 3 zwischen den jeweiligen Berührungsstellen der Kontaktmittel 5, 6. Durch Veränderung des Winkels β, also der Winkellage der beiden Komponenten 1, 2 zueinander, kann die axial wirksame Steifigkeit des ringförmig ausgebildeten Koppelelementes 3 stufenlos eingestellt werden. Kleinere Winkel β führen zu einer höheren Steifigkeit, größere Winkel β zu einer geringeren Steifigkeit. Selbstverständlich ist es möglich, die Anzahl n der pro Komponente vorzusehenden Kontaktmittel je nach Einsatzfall zu wählen. Die Ausbildung des Koppelelementes 3 ist nicht zwingend kreisringförmig vorzunehmen, bspw. zeigt Figur 3b eine abgewandelte Ringform, bei der die Ringbreite zwischen den Berührstellen jeweils größer bemessen ist als die Ringbreite an den Berührstellen. Auch sind grundsätzlich Abweichungen von der Ringform, bspw. n-eckige Ausbildungen für das Koppelelement denkbar.

Um die Komponente 1 relativ zur Komponente 2 um die Raumachse 4 zur verdrehen und damit das Winkelmaß β zu variieren, ist die in Figur 1 drehbar angeordnete Komponente 2 manuell um die Raumachse 4 drehbar angeordnet. Auch ist es denkbar einen Stellaktor zwischen beiden Komponenten 1, 2 vorzusehen, um auf diese Weise eine adaptive, autonome oder fernsteuerbare Steifigkeitseinstellung zu ermöglichen. Ein derartiger Stellaktor lässt sich in vorteilhafter Weise integrativ in den inneren Bauraum zwischen beiden Komponenten 1, 2 platzieren. Als Stellaktor besonders geeignet ist bspw. ein als Schrittmotor mit oder ohne Getriebe ausgebildeter Elektromotor, ein mittels Piezomaterial angetriebener Wandlerwellenmotor, ein sog. Inchwormmortor, dessen Funktionsweise gleichsam auf der Verwendung eines Wandlermaterials, vorzugsweise auf Piezoaktoren beruht. Ferner kann das ringförmig ausgebildete Koppelelement selbst als Wandlerwellenmotor ausgebildet sein, indem die Ringflächen mit geeigneten Flächenpiezoaktoren versehen sind. Auch ist der Einsatz von Aktoren auf Basis von Formgedächtnislegierungen (SMA) denkbar. So können die Längung bzw. Kürzung von aus SMA-Material gefertigten Drähten in eine rotatorische Bewegung beider Komponenten 1, 2 relativ zueinander umgesetzt werden. Neben den vorstehen erwähnte Aktorprinzipien eignen sich sämtliche Aktoren, bei denen eine translatorische Bewegung in eine rotatorische Bewegung übersetzt werden kann, wie bspw. die Verwendung von Stapelaktoren auf Basis von Piezowandlern oder elektroaktiven Elastomeren. Die Bewegungsumsetzung kann mit Hilfe mechanischer oder hydraulischer Übersetzungen ermöglicht werden.

Eine weiter Einflussnahme auf die axial wirksame Steifigkeit bzw. Elastizität des ringförmig ausgebildeten Koppelelementes besteht neben der unterschiedlichen Positionierung der Berührstellen der Kontaktmittel längs zur Ringumfangsfläche, wie vorstehend beschrieben, auch und insbesondere in der Materialwahl, aus der das ringförmige Koppelelement 3 besteht. Grundsätzlich besteht das ringförmige Koppelelement aus einem elastischen Material, wie bspw. Stahl oder aus einem Faserverbundwerkstoff. Denkbar ist jedoch auch die Ausbildung des ringförmigen Koppelelementes aus einer Zusammensetzung von mehreren unterschiedlichen Materialien, bspw. im Rahmen einer Sandwich-Struktur. So können auch stärker gedämpfte Materialien, wie Elastomere zum Einsatz kommen. Denkbar ist auch eine zusätzliche Bedämpfung, bspw. durch den Einsatz von auf dem ringartigen Koppelelement oder zwischen mehreren Ringen applizierten Piezowandlern. Zur zusätzlichen Bedämpfung sind außerdem Materialien wie dielektrische Elastomere, ferroelektrische Folien oder Magneto- bzw. Elektrostriktoren denkbar. Diese können vorzugsweise im inneren Bauraum zumindest bereichsweise zwischen der ersten und zweiten Komponente eingebracht sein und beide Komponenten miteinander verbinden, um auf diese Weise Einfluss auf das Schwingungsverhalten wenigstens einer Komponente nehmen zu können.

Das Material und die geometrische Form des ringförmig ausgebildeten Koppelelementes bestimmen grundsätzlich den Betrag der resultierenden Steifigkeit für einen bestimmten Winkel β. Durch unterschiedliche Ausführungen der geometrischen Form und des Materials lassen sich demzufolge unterschiedliche Steifigkeitskennlinien über den jeweiligen Verstellwinkel β erreichen.

Figur 4 zeigt eine Ausführungsform der lösungsgemäßen Vorrichtung, die einen kompakt gestalteten Schwingungstilger darstellt. In diesem Fall ist die erste Komponente 1 fest oder einstückig mit einem schwingungszudämpfenden Körper 7 verbunden. Die über das Koppelmittel 3 mit der ersten Komponente 1 verbundene zweite Komponente 2 stellt die Tilgermasse des Schwingungstilgers dar. Diese Ausführungsform gemäß Figur 4 zeigt eine vorteilhafte Möglichkeit auf, ein Schwingungstilgersystem platzsparend und kompakt auszuführen, bei dem insbesondere ein innerer Bauraum durch die Komponenten 1, 2 umschlossen wird, in dem sämtliche für die Verstellung der Tilgerfrequenz erforderlichen Elemente eingebracht sind. So bedarf es bspw. zur Schwingungserfassung eines entsprechend auf dem ringförmigen Koppelelement 3 angebrachten Sensors S, bspw. in Form eines Piezoflächensensors. In Abhängigkeit des jeweils erfassten Schwingungszustandes gilt es im Weiteren mittels eines geeigneten Stellaktors A die axial gerichtete Steifigkeit des ringförmig ausgebildeten Koppelelementes 3 entsprechend zu verändern, indem die Komponente 2, d.h. die Tilgermasse relativ zur Komponente 1 um die Raumachse 4 gedreht wird.

Von besonderem Vorteil ist es, dass die äußere Bauform des Schwingungstilgers sich während der Verdrehung der beiden Komponenten 1, 2 relativ zueinander nicht ändert. Dies unterscheidet das lösungsgemäße Schwingungstilgersystem von an sich bekannten Systemen, bei denen bspw. Massen translatorisch verschoben werden.

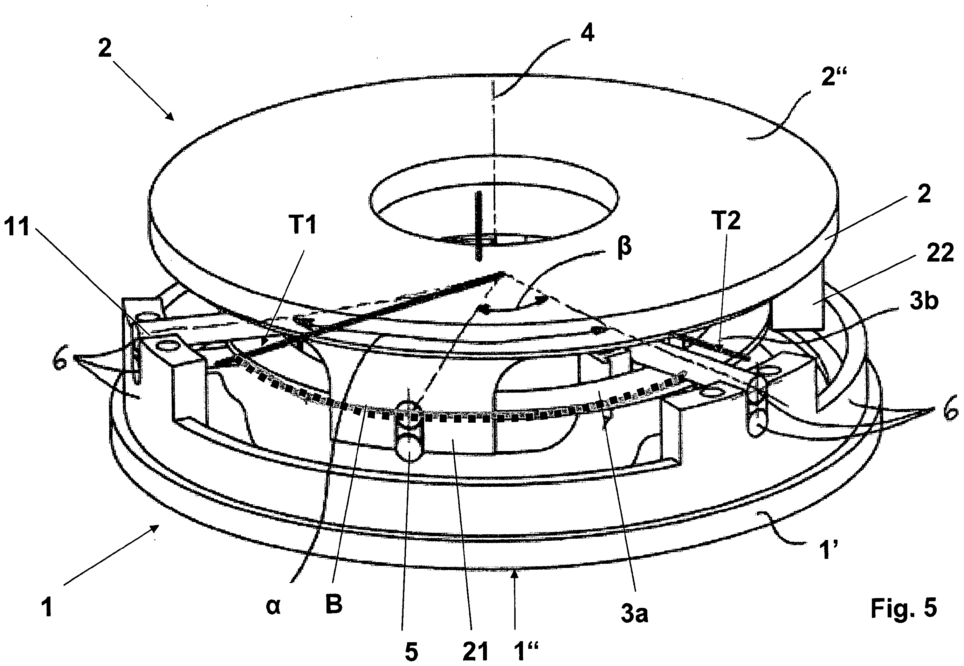

In Figur 5 ist eine Ausführungsform gezeigt, die vergleichbar ist mit dem in Figur 1 dargestellten Ausführungsbeispiel. Aus diesem Grunde verweisen die in Figur 5 verwendeten, bekannten Bezugszeichen auf bereits erläuterte Komponenten. Um Wiederholungen zu vermeiden, werden die bekannten Komponenten nicht erneut erläutert. Im Unterschied zu Figur 1 ist das ringartige Koppelelement 3 nicht wie in Figur 1 als einstückig ausgebildete Ringscheibe ausgebildet, vielmehr ist diese Ringscheibe nun in vier Ringscheibensektoren 3a, 3b, 3c, 3d unterteilt, d.h. die Ringscheibe ist vierfach durch jeweils radiale Trennschnitte T1, T2, T3, T4, (T3, T4 nicht dargestellt) in vier jeweils gleichgroße Ringscheibensektoren 3a, 3b, 3c, 3d separiert, von denen die Sektoren 3c, 3d aufgrund der perspektivischen Darstellung nicht sichtbar sind. Stellvertretend für alle vier Ringscheibensektoren beziehen sich die weiteren Erläuterungen auf den Ringscheibensektor 3a, der, wie alle anderen, zwei stirnseitige rechteckförmige Trennflächen längs der Trennschnitt T1 und T2 aufweist. Selbstverständlich kann als Koppelelement auch eine von der Ringscheibenform abweichende Geometrie gewählt werden, bspw. ein zu einem Ring geformtes drahtförmiges Koppelelement mit einem kreisrunden Drahtquerschnitt.

Um die einzelnen voneinander getrennten Ringscheibensektoren 3a, 3b, 3c, 3d zwischen beiden Komponenten 1, 2 in der aus Fig. 5 entnehmbaren Form zu lagern ist am Beispiel des Ringscheibensektors 3a dieser einseitig unmittelbar zum Trennschnitt T2 vermittels der stabförmigen Kontaktmittel 6, die an der unteren Komponente 1 gelagert sind, fest gelagert, bspw. im Wege einer Klemmkraftverbindung. Die gegenüberliegende, stirnseitige Trennfläche des Ringscheibensektors 3a längs des Trennschnittes T1 endet hingegen frei ohne weitere Auflagepunkte oder -flächen. Die stirnseitigen Trennflächen der jeweils benachbarten Ringscheibensektoren grenzen lose aneinander. Somit entspricht die Lagerung des Ringscheibensektors 3a sowie auch aller übrigen Ringscheibensektoren der Lagerung eines einseitig eingespannten Feder- oder Biegebalkens. Die in Figur 5 punktiert eingezeichnete Bogenlänge B entspricht der Bogenlänge des jeweils einseitig eingespannten Ringscheibensektors 3a längs der die mit dem Ringscheibensektor 3a in Schleifkontakt stehenden Kontaktmittel 5 der Komponente 2 verdrehbar gelagert ist. Die Kontaktmittel 5 umfassen den Ringscheibensektor beidseitig, d.h. von oben und von unten und vermögen auf diese Weise bidirektionale Schwingungskräfte auf den Ringscheibensektor 3a einzuleiten.

Zur Variation der zwischen beiden Komponenten längs der Raumachse 4 wirkenden Steifigkeit sind beide Komponenten 1 und 2, wie auch beim Ausführungsbeispiel in Figur 1 erläutert, relativ zueinander zu verdrehen. Die weichste Einstellung ergibt sich aufgrund der Aufteilung des Koppelelementes in Ringscheibensektoren aber erst bei einer Verdrehung der Komponente 2 gegenüber der Komponente 1 bis zur Trennstelle der jeweiligen Ringscheibensektoren und nicht wie bisher beim halben Winkel zwischen den Anbindungspunkten, wie dies bei dem Ausführungsbeispiel in Figur 1 der Fall ist. Somit ist die weichste Einstellung erreicht, wenn sich die in Figur 5 ersichtlichen Kontaktmittel 5 der Komponente 2 längs oder nahe der Trennlinie T1 befinden, zumal in dieser Position wirken die Schwingungskräfte jeweils an den von den jeweiligen Festlagerpunkten entferntesten Bereichen der Ringscheibensektoren auf diese ein.

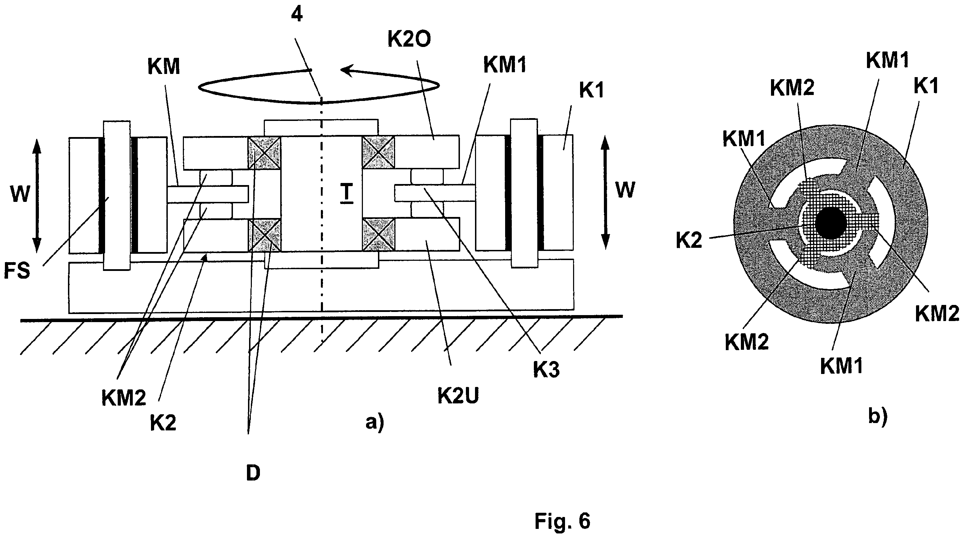

In Fig. 6 ist ein weiteres Ausführungsbeispiel für eine Vorrichtung zur Übertragung oder Entkopplung mechanischer Schwingungen zwischen zwei Komponenten illustriert.

Fig. 6a zeigt einen Längsschnitt durch eine vorteilhaft ausgebildete Vorrichtung, mit einer ersten Komponente K1, die kreisringförmig ausgebildet ist und entsprechend der Pfeildarstellungen bidirektional schwingend zur Wirkrichtung W gelagert ist. Die erste Komponente K1 stellt eine kreisringförmige Masse dar, sie kann jedoch auch andere Ausführungsgeometrien annehmen. Am Innenumfang der kreisringförmig ausgebildeten, ersten Komponente K1 ist über stegartig ausgebildete Kontaktmittel KM1 ein ringscheibenförmig ausgebildetes Flächenelement K3 befestigt. Im gezeigten Ausführungsbeispiel verbinden die stegartig ausgebildeten Kontaktmittel KM1 das ringscheibenförmige Flächenelement K3 mit der ersten Komponente einstückig. Die drei im Ausführungsbeispiel vorgesehenen stegartigen Kontaktmittel KM1 sind relativ zum Innenumfangsring der ringartig ausgebildeten ersten Komponente K1 gleich verteilt angeordnet, d.h. sie schließen miteinander einen Winkel von 120° zur Mittenachse, die zugleich Drehachse 4 ist, ein. Selbstverständlich können auch zwei, vier oder mehr derartige stegartig ausgebildete Kontaktmittel KM1 zur Verbindung zwischen dem Flächenelement K3 und der ersten Komponente K1 vorgesehen werden. In allen Fällen sind die jeweiligen stegartig ausgebildeten Kontaktmittel KM1 in Umfangsrichtung gleich verteilt anzuordnen.

Längs einer Tragstruktur T, die ihrerseits statisch bzw. ortsfest angeordnet ist, ist eine um die Drehachse 4 drehbar angeordnete zweite Komponente K2 derart angebracht, dass sie relativ zur Drehachse 4 axialfest, d.h. nicht längs zur Wirkrichtung W verschoben werden kann. Die zweite Komponente K2 ist als Doppelringstruktur ausgebildet und weist eine obere Ringscheibenform K2O sowie eine untere Ringscheibenform K2U auf, die beide längs zur Drehachse 4 übereinander und fluchtend zueinander angeordnet sind und mittels eines Drehlagers D drehbar und axialfest zur Tragstruktur T gefügt sind. Die Ringscheibenformen K2O, K2U der zweiten Komponente K2 überragen radial das ringscheibenförmig ausgebildete Flächenelement K3. Über vorzugsweise als Schleif- oder Rollenkörper ausgebildete Kontaktmittel KM2 steht die zweite Komponente K2 in Schleif- bzw. Rollenkontakt jeweils mit der Flächenoberseite sowie Flächenunterseite des Flächenelementes K3 in Kontakt. Gleichsam der Anzahl der Kontaktmittel KM1 ist eine entsprechende Anzahl an Kontaktmittel KM2 vorgesehen, die ebenfalls gleich verteilt um die Drehachse 4 angebracht sind. In der Draufsicht-Darstellung gemäß Fig. 6b ist zu ersehen, dass die zur zweiten Komponente K2 zugehörigen Kontaktmittel KM2 gleich verteilt um die Drehachse 4 angebracht sind.

Die erste Komponente K1 wird über die Lagerung des Flächenelementes K3 jeweils zwischen den Kontaktmitteln KM2 vollständig gehalten bzw. abgestützt. Lediglich aus Gründen der Sicherstellung einer ausschließlich bidirektional orientierten Längsbeweglichkeit der ersten Komponente K1 in Wirkrichtung W ist die erste Komponente K1 von Führungsstiften FS durchragt, die mit der Tragstruktur T verbunden sind.

Gilt es, die Federsteifigkeit zwischen der ersten Komponente K1 und der zweiten Komponente K2 zu variieren, so bedarf es lediglich die um die Drehachse 4 drehbar gelagerte Komponente K2 relativ zur um die Drehachse 4 drehfesten Komponente K1 zu verdrehen. Die aus Fig. 6b ersichtliche Konstellation entspricht einer Relativstellung zwischen der ersten und zweiten Komponente mit jeweils minimaler Federsteifigkeit, d.h. maximaler Elastizität, da hier die zur ersten Komponente K1 zugehörigen Kontaktmittel KM1 und die zur zweiten Komponente K2 zugehörigen Kontaktmittel KM2 maximal um die Drehachse voneinander beabstandet sind. Im Falle einer deckungsgleichen Anordnung zwischen den einzelnen Kontaktmitteln KM1 und KM2 wäre die Stellung maximaler Federsteifigkeit erreicht.

In der in Fig. 6 dargestellten Ausführungsform ist die jeweils erste Komponente K1 drehfest gelagert, wohingegen die zweite Komponente K2 drehbar um die Drehachse 4 angeordnet ist. Die erste Komponente K1 vermag lediglich bidirektionale Schwingungen in Wirkrichtung W auszuführen, ohne dabei einer Drehung zu unterliegen. Dagegen ruht die zweite Komponente K2 relativ zur Wirkrichtung W, ist jedoch um die Drehachse 4 drehbar gelagert.

Eine weitere bevorzugte Eigenschaft der in Fig. 6 dargestellten Ausführungsform ist die Verdrehbarkeit der zweiten Komponente K2 relativ zur ersten Komponente K1 um 360° und dies mit beliebiger Drehrichtung.

Des Weiteren sind alternative Ausbildungsformen der in Fig. 6 illustrierten Ausführungsform möglich. So wäre es beispielsweise denkbar, die zweite Komponente K2 drehfest mit der Tragstruktur T zu verbinden und eine Verdrehmöglichkeit zwischen den Kontaktmitteln KM1 und der ersten Komponente K1 vorzusehen. Dies könnte beispielsweise dadurch realisiert werden, indem am inneren Umfangsrand der ringartig ausgebildeten ersten Komponente K1 eine vollständig umlaufende nutförmige Ausnehmung vorgesehen ist, in die jeweils die stegartig ausgebildeten Kontaktmittel KM1 eingreifen.

Die anhand der in Figur 1 und 6 entnehmbare kompakte und nach außen hin abgeschlossene Bauform der lösungsgemäßen Vorrichtung eröffnet die Möglichkeit mehrerer baugleiche oder mit unterschiedlichen Steifigkeitskennlinien ausgerüstete lösungsgemäße Vorrichtungen nach dem Baukastenprinzip miteinander zu kombinieren. Durch die kompakte Bauform können bspw. zwei, drei oder mehrere in Figur 1 bzw. 5 dargestellte Schwingungsentkoppler miteinander gekoppelt werden. Auf diese Weise lässt sich der variabel einstellbare Steifigkeitsbereich erheblich vergrößern. Bspw. lassen sich zwei der in Figur 1 oder 5 illustrierten Schwingungsentkoppler in Reihe schalten, wobei das zweite Koppelelement eines ersten Schwingungsentkopplers mit der ersten Komponente eines zweiten Schwingungsentkopplers miteinander in Wirkverbindung gebracht werden. Dies kann bspw. mit Hilfe eines geeignet ausgebildeten Verbindungselementes erfolgen, das so ausgeführt ist, dass die Verstellung der Federsteifigkeit eines Schwingungsentkopplers automatisch beginnt, sobald der Verstellweg zur Variation der Federsteifigkeit bei dem anderen Schwingungsentkoppler das Ende des Verstellbereiches erreicht hat. Konstruktiv kann dies bspw. durch einen entsprechenden Mitnehmermechanismus realisiert werden.

Auch ermöglicht eine entsprechende Reihenschaltung von mehreren lösungsgemäß ausgebildeten Schwingungstilgern eine gleichzeitige Dämpfung von mehreren Frequenzen an einem schwingungszudämpfenden System.

In einem weiteren möglichen Ausführungsbeispiel lässt sich der lösungsgemäß ausgebildete Schwingungsentkoppler als Inertialmassenanreger verwenden, bei dem eine Schwingungsanregung bspw. durch am ringförmig ausgebildeten Koppelelement applizierte Piezowandler erfolgen kann. Derartige Piezowandler können entweder oberflächig am Koppelelement appliziert oder in diesem integriert werden. Eine Integration lässt sich bei einem aus Faserverbundwerkstoffen hergestellten, ringförmig ausgebildeten Koppelelementes ohne Aufwand realisieren.

Auch ist es in einem Ausführungsbeispiel möglich am ringförmig ausgebildeten Koppelelement integrierte oder applizierte Flächenpiezowandler vorzusehen, zu Zwecken einer aktiven oder semiaktiven Bedämpfung des ringförmigen Koppelelementes. Eine derartige Bedämpfung des Koppelelementes ist in Kombination mit oder alternativ zu den integrierten oder applizierten Piezowandlern auch mittels zum ringförmigen Koppelelement parallel geschalteten Dämpfungselementen möglich, die elektrorheologische oder magnetorheologische Fluide enthalten. Derartige Dämpfungselemente können sowohl als separate Bauteile ausgeführt sein, aber insbesondere auch innerhalb des von den beiden Komponenten 1, 2 umschlossenen inneren Bauraums integriert sein.

Eine weitere Alternative für eine kontrollierte Bedämpfung des ringförmig ausgebildeten Koppelelementes stellt eine elektrodynamische Bedämpfung durch eine dem ringförmig ausgebildeten Koppelelement parallel geschaltete Tauchspule dar.

Auch lässt sich der lösungsgemäß ausgebildete Schwingungsentkoppler mit einer weiteren Sensorik kombinieren, mit der es möglich ist, Weg-/Geschwindigkeits- oder Beschleunigungsmessungen vorzunehmen. Die diesbezüglich erhaltenen Sensorsignale können als Eingangsgrößen für eine an dem Schwingungsentkoppler vorgesehenen Aktorik dienen.

Zusammenfassend ergeben sich in Zusammenhang mit dem lösungsgemäß ausgebildeten Schwingungsentkoppler, der sowohl als Lagereinheit sowie auch als Schwingungstilger eingesetzt werden kann, folgende Vorteile:
- Die lösungsgemäße Vorrichtung zur gezielten Übertragung oder Entkopplung von mechanischen Schwingungen ermöglicht eine stufenlose Verstellung der in Wirkrichtung orientierten Steifigkeit eines ringförmig ausgebildeten Koppelelementes über einen im Vergleich zu den bekannten Schwingungsentkopplern sehr viel größeren Verstellbereich.
- Der konstruktiv einfache Aufwand und die aus der Fertigung resultierenden Kosten für die lösungsgemäße Vorrichtung sind sehr gering.
- Aufgrund der kompakten nach außen hin in Erscheinung tretenden Bauform kann die für die Verstellung des Verdrehwinkels erforderliche Aktorik sowie ggf. Sensorik platzsparend und mechanisch geschützt im Inneren zwischen den beiden Komponenten untergebracht werden. Im Falle einer Tilgeranwendung kann ein Gehäuseteil selbst die Tilgermasse darstellen.
- Im Gegensatz zu bekannten Schwingungstilgern ändert sich die nach außen hin in Erscheinung tretende Bauform während einer Tilgerfrequenzanpassung nicht.
- Es sind keine Aktorikteile an der Tilgermasse erforderlich, wodurch es möglich ist, sehr kleine Tilgermassen zu realisieren, die sich wiederum positiv auf die Skalierbarkeit in Bezug auf Kräfte und Frequenzbereich auswirken.
- Beim Einsatz eines aus Federstahl oder Faserverbundwerkstoff gefertigten ringförmig ausgebildeten Koppelelementes können sehr niedrige Dämpfungen erzielt werden, wodurch eine starke Tilgerwirkung der Resonanzfrequenz des Tilgers hervorgerufen werden kann.
- Durch die dynamische Verformung des ringförmig ausgebildeten Koppelelementes kann mittel am Koppelelement applizierter Piezowandler Energie erzeugt werden, die in weiteren Systemen genutzt werden kann, Stichwort Energy-Harvesting.
- Die lösungsgemäße Vorrichtung lässt sich ganz allgemein zur Schwingungsdämpfung in technischen Systemen oder Strukturen einsetzen, so insbesondere im Bereich der Automobiltechnik, des Maschinen- und Anlagenbaus. Sowohl aktive als auch passive Lagerungen von Maschinen, Maschinenbauteilen oder Aggregaten sind realisierbar. Gilt es bspw. eine Maschine semiaktiv oder aktiv möglichst schwingungsarm zu lagern, so wird das Lager beim Hochfahren der Maschine in einer möglichst harten Einstellung, d. h. die axiale wirksame Steifigkeit des Koppelelementes ist maximal, gehalten. Im Betriebspunkt wird hingegen das Lager durch ein möglichst schnelles, d.h. abruptes Umschalten in eine weiche Einstellung gebracht, um für eine möglichst schwingungsdämpfende Lagerung zu sorgen.
- Auch lässt sich die lösungsgemäße Vorrichtung im Rahmen der Betriebsfestigkeitsprüfung oder Bauteilprüfung zur Anbindung der Bauteile einsetzen. Hierdurch können die in der realen Umgebung der Bauteile vorhandenen Steifigkeiten in der Prüfung berücksichtigt werden. So ermöglicht eine verstellbare Steifigkeit eine sehr schnelle Anpassung der jeweiligen Anbindungsbedingungen.

### Bezugszeichenliste

- 1: erste Komponente
- 1': Erste Gehäuseplatte
- 1": Erste Kontaktfläche
- 11, 12, 13: Aufnahmestrukturen
- 2: zweite Komponente
- 2': Zweite Gehäuseplatte
- 2": Zweite Kontaktfläche
- 21,22,23: Aufnahmestrukturen
- 3: Koppelelement
- 4: Raumachse, Wirkrichtung
- 5: Kontaktmittel
- 6: Kontaktmittel
- 7: Schwingender Körper
- A1: Aufnahmeschulter
- Au: Aufnahmenut
- S: Sensor
- A: Stellaktor

## Patentansprüche

1. Vorrichtung zur Übertragung oder Entkopplung von mechanischen Schwingungen, mit einer ersten und einer zweiten Komponente (1,2), die über ein Koppelelement (3) miteinander verbunden sind, das über eine variabel einstellbare Steifigkeit längs wenigstens einer Wirkrichtung verfügt, längs der zumindest eine Komponente schwingend gelagert ist,
**dadurch gekennzeichnet, dass** das Koppelelement ein Flächenelement mit einer Flächenober- und einer Flächenunterseite sowie einer Flächenlängserstreckung ist, das formstabil in und elastisch lateral zur Flächenlängserstreckung ist,
dass n ≥ 2 Kontaktmittel (6) raumfest an der ersten Komponente angebracht sind, über die die erste Komponente an n ≥ 2 erste Kontaktstellen mit der Flächenunterseite und/oder Flächenoberseite des Flächenelementes in Berührung tritt,
dass n ≥ 2 Kontaktmittel (5) raumfest an der zweiten Komponente angebracht sind, über die die zweite Komponente an n ≥ 2 zweite Kontaktstellen mit der Flächenunterseite und/oder Flächenoberseite des Flächenelementes in Berührung tritt,
dass beide Komponenten relativ zueinander um eine orthogonal zur Flächenlängserstreckung orientierte Raumachse (4), die mit der wenigstens einen Wirkrichtung längs der zumindest eine Komponente schwingend gelagert ist zusammenfällt, drehbar angeordnet sind.

2. Vorrichtung nach Anspruch 1,
**dadurch gekennzeichnet, dass** das Flächenelement ring- oder ringscheibenförmig ausgebildet ist.

3. Vorrichtung nach Anspruch 1 oder 2,
**dadurch gekennzeichnet, dass** die Kontaktmittel der ersten Komponente zumindest an der Flächenunterseite und die Kontaktmittel der zweiten Komponente zumindest an der Flächenoberseite lose kraftbeaufschlagt anliegen.

4. Vorrichtung nach Anspruch 1 oder 2,
**dadurch gekennzeichnet, dass** die Kontaktmittel der ersten Komponente lösbar oder unlösbar fest zumindest an die Flächenunterseite oder Flächenoberseite gefügt sind, und
dass die Kontaktmittel der zweiten Komponente kraftbeaufschlagt lose oder lösbar fest zumindest an die Flächenunterseite oder Flächenoberseite gefügt sind.

5. Vorrichtung nach einem der Ansprüche 1 bis 4,
**dadurch gekennzeichnet, dass** die Kontaktmittel stab- oder stangenförmig ausgebildet sind, über eine Längserstreckung verfügen und mit der Flächenunterseite und/oder Flächenoberseite einen linienförmigen Kontakt bilden, oder
dass die Kontaktmittel streifenförmig ausgebildet sind, über eine Längserstreckung verfügen und mit der Flächenunterseite und/oder Flächenoberseite einen streifenförmigen Kontakt bilden, und
dass die Kontaktmittel an den Komponenten und relativ zum Flächenelement derart angeordnet sind, dass die Längserstreckung der Kontaktmittel jeweils radial zur Raumachse orientiert ist.

6. Vorrichtung nach einem der Ansprüche 1 bis 5,
**dadurch gekennzeichnet, dass** die n ≥ 2 Kontaktmittel an jeder Komponente jeweils mit einem äquidistanten Abstand um die Raumachse relativ zu dem Flächenelement angeordnet sind, so dass für einen um die Raumachse bezogenen Abstandswinkel α zwischen zwei Kontaktmittel pro Komponente gilt: α = 360°/n.

7. Vorrichtung nach Anspruch 6,
**dadurch gekennzeichnet, dass** beide Komponenten aus einer ersten Position, in der das Flächenelement eine geringste Steifigkeit in Wirkrichtung besitzt und die Kontaktmittel beider Komponenten in Projektion längs zur Raumachse auf das Flächenelement einen gegenseitigen Abstandswinkel β = 360°/2n aufweisen, durch Relativdrehung beider Komponenten um die Raumachse stufenlos in eine zweite Position überführbar sind, in der das Flächenelement eine größte Steifigkeit in Wirkrichtung besitzt und die Kontaktmittel beider Komponenten in Projektion längs zur Raumachse auf das Flächenelement miteinander in Deckung oder in weitgehender Deckung sind.

8. Vorrichtung nach einem der Ansprüche 1 bis 7,
**dadurch gekennzeichnet, dass** eine Stellaktorik vorgesehen ist, die beide Komponenten relativ zueinander um die Raumachse zu drehen in der Lage ist.

9. Vorrichtung nach einem der Ansprüche 1 bis 8,
**dadurch gekennzeichnet, dass** das Flächenelement aus einem einheitlichen Material oder einem Verbundwerkstoff aus mehreren unterschiedlichen Materialien besteht.

10. Vorrichtung nach einem der Ansprüche 1 bis 9,
**dadurch gekennzeichnet, dass** auf dem Flächenelement appliziert oder in diesem integriert wenigstens ein aus Wandlermaterial bestehender Aktor, vorzugsweise in Form eines Piezowandlers, vorgesehen ist.

11. Vorrichtung nach einem der Ansprüche 1 bis 10,
**dadurch gekennzeichnet, dass** die erste und zweite Komponente gehäuseartig ausgebildet sind, die gemeinsam einen inneren Bauraum umfassen, in dem das Koppelelement eingebracht ist, das über die Kontaktmittel mit der ersten und zweiten Komponente in Wirkverbindung tritt, und
dass die erste und zweite Komponente jeweils über eine dem Bauraum abgewandte Kontaktfläche verfügen.

12. Vorrichtung nach einem der Ansprüche 1 bis 11,
**dadurch gekennzeichnet, dass** wenigstens eine der beiden Komponenten Teil eines schwingenden Systems ist.

13. Vorrichtung nach einem der Ansprüche 1 bis 12,
**dadurch gekennzeichnet, dass** das Flächenelement eine Öffnung besitzt, durch die mittig die Raumachse verläuft.

14. Vorrichtung nach einem der Ansprüche 11 bis 13,
**dadurch gekennzeichnet, dass** der innere Bauraum mit einem Material gefüllt ist, und dass das Material zumindest bereichsweise die erste und zweite Komponente verbindet und einen Einfluss auf das Schwingungsverhakten wenigstens einer Komponente nimmt.

15. Vorrichtung nach dem Anspruch 14,
**dadurch gekennzeichnet, dass** das im inneren Bauraum eingebrachte Mateial ein Wandlermaterial, vorzugsweise ein magneto- oder elektrorheologisches Material, ist.

16. Vorrichtung nach einem der Ansprüche 2 bis 15,
**dadurch gekennzeichnet, dass** das ring- oder ringscheibenförmige Flächenelement in wenigstens zwei separate, jeweils gleichgroße Ring- oder Ringscheibensektoren geteilt ist, die jeweils an ihren stirnseitigen Trennflächen lose aneinandergrenzen, dass die erste Komponenten jeweils fest mit den wenigstens zwei separaten Ring- oder Ringscheibensektoren derart verbunden ist, dass die wenigstens zwei separaten Ring- oder Ringscheibensektoren jeweils an einer nahe an einer Trennfläche befindlichen Kontaktstelle über die Kontaktmittel mit der ersten Komponente fest gefügt ist.

17. Vorrichtung nach Anspruch 16,
**dadurch gekennzeichnet, dass** die zweite Komponente über ihre Kontaktmittel längs der einseitig mit der ersten Komponente fest verbundenen Ring- oder Ringscheibensektoren in Schleifkontakt steht.

18. Vorrichtung zur Übertragung oder Entkopplung von mechanischen Schwingungen, mit einer ersten und einer zweiten Komponente, die über ein Koppelelement miteinander verbunden sind, das über eine variabel einstellbare Steifigkeit längs wenigstens einer Wirkrichtung verfügt, längs der zumindest eine Komponente schwingend gelagert ist,
**dadurch gekennzeichnet,**
**dass** das Koppelelement ein Flächenelement mit einer Flächenober- und einer Flächenunterseite sowie einer Flächenlängserstreckung ist, das formstabil in und elastisch lateral zur Flächenlängserstreckung ist,
**dass** die schwingend gelagerte erste Komponente zumindest zur Übertragung von längs der wenigstens einen Wirkrichtung orientierten Kräften mit dem Flächenelement an n ≥ 2 erste Kontaktstellen verbunden ist,
**dass** n ≥ 2 Kontaktmittel raumfest an der zweiten Komponente angebracht sind, über die die zweite Komponente an n ≥ 2 zweite Kontaktstellen mit der Flächenunterseite und/oder Flächenoberseite des Flächenelementes in Berührung tritt,
**dass** beide Komponenten relativ zueinander um eine orthogonal zur Flächenlängserstreckung orientierte Raumachse, die mit der wenigstens einen Wirkrichtung längs der zumindest eine Komponente schwingend gelagert ist zusammenfällt, drehbar angeordnet sind.

19. Vorrichtung nach Anspruch 18,
**dadurch gekennzeichnet, dass** das Flächenelement ring- oder ringscheibenförmig ausgebildet ist,
dass die schwingend gelagerte erste Komponente über die n ≥ 2 Kontaktstellen, die in Umfangsrichtung des ring- oder ringscheibenförmig ausgebildeten Flächenelementes gleich verteilt sind, fest oder einstückig mit dem Flächenelement längs eines dem Flächenelement zuordenbaren Umfangsrandes verbunden ist.

20. Vorrichtung nach Anspruch 18,
**dadurch gekennzeichnet, dass** die zweite Komponente relativ zur ersten Komponente und zum ring- oder ringscheibenförmig ausgebildeten Flächenelement drehbar um die wenigstens eine orthogonal zur Flächenlängserstreckung orientierte Raumachse angeordnet ist, und
dass die der zweiten Komponente zuordenbaren n ≥ 2 Kontaktmittel jeweils in schleifendem oder abrollendem Kontakt mit der Flächenober- und -unterseite des Flächenelementes stehen.

21. Vorrichtung nach einem der Ansprüche 1 bis 20,
**dadurch gekennzeichnet, dass** die Anzahl der Kontaktstellen, an denen die erste und zweite Komponente mit dem Koppelelement in Wirkverbindung treten jeweils gleich ist.

22. Vorrichtung nach einem der Ansprüche 18 bis 21,
**dadurch gekennzeichnet, dass** eine Tragstruktur vorgesehen ist, an der die zweite Komponente drehbar um die wenigsten einer Wirkrichtung und axialfest zu der wenigstens einen Wirkrichtung angebracht ist, und
dass die erste Komponente bidirektional auslenkbar zu der wenigstens einen Wirkrichtung gelagert und über das mit der ersten Komponente verbundene Flächenelement vermittels der der zweiten Komponente zuordenbaren Kontaktmittel gestützt ist.

23. Verwendung der Vorrichtung nach einem der Ansprüche 1 bis 22 als Schwingungstilger,
**dadurch gekennzeichnet, dass** die erste Komponente an ein schwingungszudämpfendes System gekoppelt ist und die zweite Komponente als Tilgermasse dient, die zur Einstellung einer Tilgerfrequenz gegenüber der ersten Komponente manuell oder aktorunterstützt drehbar ist.

24. Verwendung der Vorrichtung nach einem der Ansprüche 1 bis 22 als schwingunsdämpfendes oder schwingungsisolierendes Lager zwischen zwei Körpern, von denen wenigstens ein Körper schwingend gelagert ist.

25. Verwendung nach Anspruch 23 oder 24,
**dadurch gekennzeichnet, dass** wenigstens zwei Vorrichtungen, eine erste und eine zweite Vorrichtung, nach einem der Ansprüche 1 bis 22 derart ausgebildet und angeordnet sind,
dass zur Realisierung einer seriellen Kopplung beider Vorrichtungen die zweite Komponente der ersten Vorrichtung fest mit der ersten Komponente der zweiten Vorrichtung gekoppelt ist, oder
dass zur Realisierung einer parallelen Kopplung beider Vorrichtungen die jeweils ersten Komponenten und die jeweils zweiten Komponenten beider Vorrichtungen fest miteinander gekoppelt sind.

## Claims

1. A device for transmitting or decoupling mechanical vibrations, comprising a first component (1) and a second component (2), which are connected to each other by means of a coupling element (3) that has a variably adjustable stiffness in at least one direction of action in which at least one component is supported in a vibrating manner,
**characterized in that** the coupling element is a planar element having a planar-element top side and a planar-element bottom side and a planar-element longitudinal extent, the planar element being dimensionally stable in the planar-element longitudinal extent and elastic lateral to the planar-element longitudinal extent,
**in that** n ≥ 2 contacting agents (6) are attached to the first component in a spatially fixed manner, by means of which contacting agents the first component contacts n ≥ 2 first contact points at the planar-element bottom side and/or planar-element top side of the planar element,
**in that** n ≥ 2 contacting agents (5) are attached to the second component in a spatially fixed manner, by means of which contacting agents the second component contacts n ≥ 2 second contact points at the planar-element bottom side and/or planar-element top side of the planar element,
**in that** both components are arranged such as to be rotatable relative to each other about a spatial axis (4) oriented orthogonally to the planar-element longitudinal extent, said spatial axis coinciding with the at least one direction of action in which at least one component is supported in a vibrating manner.

2. The device according to Claim 1,
**characterized in that** the planar element is constructed annularly or in a disc-shaped manner.

3. The device according to Claim 1 or 2,
**characterized in that** the contacting agents of the first component bear loosely in a force-loaded manner at least on the planar bottom side and the contacting agents of the second component bear loosely in a force-loaded manner at least on the planar top side.

4. The device according to Claim 1 or 2,
**characterized in that** the contacting agents of the first component are securely joined releasably or unreleasably at least to the planar bottom side or planar top side, and
**in that** the contacting agents of the second component are securely joined in a force-loaded manner loosely or releasably at least to the planar bottom side or planar top side.

5. The device according to one of Claims 1 to 4,
**characterized in that** the contacting agents are constructed in a rod- or bar-shaped manner, have a longitudinal extent and form linear contact with the planar bottom side and planar top side, or
**in that** the contacting agents are constructed in a strip-shaped manner, have a longitudinal extent and form linear contact with the planar bottom side and planar top side, and
**in that** the contacting agents are arranged in such a manner on the components and relatively to the planar element that the longitudinal extent of the contacting agents is oriented radially to the spatial axis in each case.

6. The device according to one of Claims 1 to 5,
**characterized in that** the n ≥ 2 contacting agents on each component are in each case arranged with an equidistant spacing around the spatial axis relatively to the planar element, so that for a spacing angle α around the spatial axis between two components, for each component it is true that: α = 360°/n.

7. The device according to Claim 6,
**characterized in that** both components can be transported by means of relative rotation of both components around the spatial axis in an infinitely variable manner from a first position, in which the planar element has a lowest stiffness in the direction of action and the contacting agents of both components have a mutual spacing angle β = 360°/2n in projection in the direction of the spatial axis onto the planar element, into a second position, in which the planar element has a largest stiffness in the direction of action and the contacting agents of both components are congruent or substantially congruent with one another in projection in the direction of the spatial axis onto the planar element.

8. The device according to one of Claims 1 to 7,
**characterized in that** an adjustment actuator is provided, which is able to rotate both components relatively to one another around the spatial axis.

9. The device according to one of Claims 1 to 8,
**characterized in that** the planar element consists of a uniform material or a composite material made up of a plurality of different materials.

10. The device according to one of Claims 1 to 9,
**characterized in that** at least one actuator consisting of converter material, preferably in the form of a piezoelectric converter, is provided in a manner applied on the planar element or integrated in the same.

11. The device according to one of Claims 1 to 10,
**characterized in that** the first and second components are constructed in a housing-like manner, which together comprise an inner space, in which the coupling element is introduced, which comes into active connection with the first and second components via the contacting agents, and
**in that** the first and second components in each case have a contact surface facing away from the space.

12. The device according to one of Claims 1 to 11,
**characterized in that** at least one of the two components is part of a vibrating system.

13. The device according to one of Claims 1 to 12,
**characterized in that** the planar element has an opening, centrally through which the spatial axis runs.

14. The device according to one of Claims 11 to 13,
**characterized in that** the inner space is filled with a material and **in that** the material connects the first and second components at least in certain areas and has an influence on the vibration behaviour of at least one component.

15. The device according to Claim 14,
**characterized in that** the material introduced in the inner space is a converter material, preferably a magneto- or electrorheological material.

16. The device according to one of Claims 2 to 15,
**characterized in that** the annular or disc-shaped planar element is divided into at least two separate, in each case equally sized ring or disc sectors, which in each case adjoin loosely at their end-face separation planes, **in that** the first component is in each case securely connected to the at least two separate ring or disc sectors in such a manner that the at least two separate ring or disc sectors are in each case securely joined to the first component at a contact point located close to a separation plane by means of the contacting agents.

17. The device according to Claim 16,
**characterized in that** the second component is in sliding contact by means of its contacting agents along the ring or disc sectors which are unilaterally securely connected to the first component.

18. A device for transmitting or decoupling mechanical vibrations, comprising a first component and a second component, which are connected to each other by means of a coupling element that has a variably adjustable stiffness in at least one direction of action in which at least one component is supported in a vibrating manner,
**characterized**
**in that** the coupling element is a planar element having a planar-element top side and a planar-element bottom side and a planar-element longitudinal extent, the planar element being dimensionally stable in the planar-element longitudinal extent and elastic lateral to the planar-element longitudinal extent,
**in that** the first component supported in a vibrating manner is connected to the planar element at n ≥ 2 first contact points for transmitting forces oriented from in the at least one direction of action,
**in that** n ≥ 2 contacting agents are attached to the second component in a spatially fixed manner, by means of which contacting agents the second component contacts n ≥ 2 second contact points at the planar-element bottom side and/or planar-element top side of the planar element,
**in that** both components are arranged such as to be rotatable relative to each other about a spatial axis oriented orthogonally to the planar-element longitudinal extent, said spatial axis coinciding with the at least one direction of action in which at least one component is supported in a vibrating manner.

19. The device according to Claim 18,
**characterized in that** the planar element is constructed annularly or in a disc-shaped manner,
**in that** the first component supported in a vibrating manner is securely or integrally connected to the planar element along a circumferential edge which can be assigned to the planar element via the n ≥ 2 contact points which are evenly distributed in the circumferential direction of the planar element which is constructed in an annular or disc-shaped manner.

20. The device according to Claim 18,
**characterized in that** the second component is arranged rotatably around the at least one spatial axis, which is oriented orthogonally to the planar longitudinal extent, relatively to the first component and to the planar element constructed in an annular or disc-shaped manner, and
**in that** the n ≥ 2 contacting agents which can be assigned to the second component are in each case in sliding or rolling contact with the planar top and bottom side of the planar element.

21. The device according to one of Claims 1 to 20,
**characterized in that** the number of contact points at which the first and second component come into active connection with the coupling element is the same in each case.

22. The device according to one of Claims 18 to 21,
**characterized in that** a support structure is provided, on which the second component is attached rotatably around the at least one direction of action and in an axially fixed manner with respect to the at least one direction of action, and **in that** the first component is supported such that it can be deflected bidirectionally with respect to the at least one direction of action and is supported via the planar element connected to the first component by means of the contacting agents which can be assigned to the second component.

23. A use of the device according to one of Claims 1 to 22 as vibration absorber,
**characterized in that** the first component is coupled to a system to be vibration damped and the second component is used as an absorber mass which is rotatable manually or supported by an actuator with respect to the first component for adjusting an absorber frequency.

24. A use of the device according to one of Claims 1 to 22 as a vibration damping or vibration insulating supporting between two bodies, of which at least one body is supported in a vibrating manner.

25. The use according to Claim 23 or 24,
**characterized in that** at least two devices, a first and a second device, are constructed and arranged in such a manner according to one of Claims 1 to 22,
that for realizing a serial coupling of both devices, the second component of the first device is securely coupled to the first component of the second device, or
that for realizing a parallel coupling of both devices, the respective first components and the respective second components of both devices are securely connected to one another.

## Revendications

1. Dispositif de transmission ou découplage de vibrations mécaniques, comportant un premier et un deuxième composant (1, 2), qui sont reliés l'un à l'autre par l'intermédiaire d'un élément de couplage (3), qui dispose d'une rigidité réglable de manière variable le long d'au moins une direction d'action, le long de laquelle au moins un composant est positionné de manière vibrante, **caractérisé en ce que** l'élément de couplage est un élément de surface avec un côté de surface supérieure et un côté de surface inférieure ainsi qu'une extension longitudinale de surface, qui est de forme stable et élastique latéralement à l'extension longitudinale de surface, **en ce que** n ≥ 2 moyens de contact (6) sont montés de manière stationnaire sur le premier composant par l'intermédiaire desquels le premier composant vient en contact sur n ≥ 2 premiers points de contact avec le côté inférieur de surface et/ou le côté supérieur de surface de l'élément de surface, **en ce que** n ≥ 2 moyens de contact (5) sont montés de manière stationnaire sur le deuxième composant, par l'intermédiaire desquels le deuxième composant vient en contact sur n ≥ 2 deuxièmes points de contact avec le côté inférieur de surface et/ou le côté supérieur de surface de l'élément de surface, **en ce que** les deux composants sont disposés de manière rotative l'un par rapport à l'autre autour d'un axe spatial (4) orienté de manière orthogonale par rapport à l'extension longitudinale de surface, qui coïncide avec au moins une direction d'action le long de laquelle au moins un composant est positionné de manière vibrante.

2. Dispositif selon la revendication 1, **caractérisé en ce que** l'élément de surface a une configuration en forme de bague ou de rondelle annulaire.

3. Dispositif selon la revendication 1 ou 2, **caractérisé en ce que** les moyens de contact du premier composant viennent reposer au moins sur le côté inférieur de surface et les moyens de contact du deuxième composant viennent reposer au moins sur le côté supérieur de surface de manière relâchée par sollicitation de force.

4. Dispositif selon la revendication 1 ou 2, **caractérisé en ce que** les moyens de contact du premier composant sont assemblés solidement de manière amovible ou inamovible au moins sur le côté inférieur de surface ou le côté supérieur de surface et **en ce que** les moyens de contact sont assemblés solidement de manière relâchée ou amovible par sollicitation de force au moins sur le côté inférieur de surface ou le côté supérieur de surface.

5. Dispositif selon une des revendications 1 à 4, **caractérisé en ce que** les moyens de contact sont conçus en forme de barre ou de tige, disposent d'une extension longitudinale et forment un contact linéaire avec le côté inférieur de surface et/ou le côté supérieur de surface ou **en ce que** les moyens de contact sont conçus en forme de bande, disposent d'une extension longitudinale et forment un contact en forme de base avec le côté inférieur de surface et/ou le côté supérieur de surface, et **en ce que** les moyens de contact disposé sur les composants et par rapport à l'élément de surface de telle sorte que l'extension longitudinale du moyen de contact soit respectivement orientée radialement à l'axe spatial.

6. Dispositif selon une des revendications 1 à 5, **caractérisé en ce que** les n ≥ 2 moyens de contact sont disposés sur chaque composant respectivement avec un espacement équidistant autour de l'axe spatial par rapport à l'élément de surface, de sorte que pour un angle d'espacement α rapporté à l'axe spatial entre deux moyens de contact par composant la formule : α=360°/n s'applique.

7. Dispositif selon la revendication 6, **caractérisé en ce que** les deux composants à partir d'une première position, dans laquelle l'élément de surface possède une rigidité minime dans la direction d'action et les moyens de contact des deux composants dans la projection longitudinalement à l'axe spatial sur l'élément de surface présentent un angle d'espacement mutuel β=360°/2n, peuvent être passés dans une deuxième position par rotation relative des deux composants autour de l'axe spatial en continu, dans laquelle l'élément de surface possède une rigidité maximale dans la direction d'action et les moyens de contact des deux composants dans la projection longitudinalement à l'axe spatial sur l'élément de surface se recouvrent l'un avec l'autre ou se recouvrent substantiellement.

8. Dispositif selon une des revendications 1 à 7, **caractérisé en ce que** un organe de réglage est prévu, qui est en mesure de tourner rotativement les deux composants l'un par rapport à l'autre autour de l'axe spatial.

9. Dispositif selon une des revendications 1 à 8, **caractérisé en ce que** l'élément de surface est constitué d'un matériau unitaire ou d'un matériau composite composé de plusieurs matériaux différents.

10. Dispositif selon une des revendications 1 à 9, **caractérisé en ce que** au moins un actionneur constitué d'un matériau convertisseur appliqué sur l'élément de surface ou intégré dans celui-ci est prévu, de préférence sous la forme d'un convertisseur piézo.

11. Dispositif selon une des revendications 1 à 10, **caractérisé en ce que** le premier et le deuxième composant ont une configuration de type boîtier, qui englobent conjointement un espace de montage intérieur, dans lequel l'élément de couplage est inséré, qui vient en liaison opérationnelle par l'intermédiaire du moyen de contact avec le premier et le deuxième composant et **en ce que** le premier et le deuxième composant disposent respectivement d'une surface de contact qui se détourne de l'espace de montage.

12. Dispositif selon une des revendications 1 à 11, **caractérisé en ce que** au moins un des deux composants est une partie d'un système vibrant.

13. Dispositif selon une des revendications 1 à 12, **caractérisé en ce que** l'élément de surface possède une ouverture, à travers laquelle s'étend l'axe spatial au centre.

14. Dispositif selon une des revendications 11 à 13, **caractérisé en ce que** l'espace de montage intérieur est rempli avec un matériau et **en ce que** le matériau relit au moins par portions le premier et le deuxième composant et exerce une influence sur le comportement de vibration d'au moins un composant.

15. Dispositif selon la revendication 14, **caractérisé en ce que** le matériau inséré dans l'espace de montage intérieur est un matériau convertisseur, de préférence un matériau magnétorhéologique ou électrorhéologique.

16. Dispositif selon une des revendications 2 à 15, **caractérisé en ce que** l'élément de surface en forme de bague ou de rondelle annulaire est divisée en au moins deux secteurs séparés, respectivement de grandeurs identiques de bague ou de rondelle annulaire, qui sont respectivement contigus l'un à l'autre de manière relâchée sur leurs surfaces de séparation frontales, **en ce que** le premier composant est relié solidement avec les au moins deux secteurs séparés de bague ou de rondelle annulaire de telle sorte que les au moins deux secteurs séparés de bague ou de rondelle annulaire soient assemblés solidement sur un point de contact se trouvant à côté d'une surface de séparation par l'intermédiaire du moyen de contact avec le premier composant.

17. Dispositif selon la revendication 16, **caractérisé en ce que** les deux composants sont en contact polissant par l'intermédiaire de leurs moyens de contact le long des secteurs de bague ou de rondelle annulaire solidement reliés d'un côté avec le premier composant.

18. Dispositif de transmission ou découplage de vibrations mécaniques, comportant un premier et un deuxième composant, qui sont reliés l'un à l'autre par l'intermédiaire d'un élément de couplage, qui dispose d'une rigidité réglable de manière variable le long d'au moins une direction d'action, le long de laquelle au moins un composant est positionné de manière vibrante, **caractérisé en ce que** l'élément de couplage est un élément de surface avec un côté de surface supérieure et un côté de surface inférieure ainsi qu'une extension longitudinale de surface, qui est de forme stable et élastique latéralement à l'extension longitudinale de surface, **en ce que** le premier composant positionné de manière vibrante est relié au moins pour la transmission de forces orientées le long d'au moins une direction d'action avec l'élément de surface sur n ≥ 2 points de contact, **en ce que** n ≥ 2 moyens de contact sont montés de manière stationnaire sur le deuxième composant, par l'intermédiaire desquels le deuxième composant vient en contact sur n ≥ 2 deuxièmes points de contact avec le côté inférieur de surface et/ou le côté supérieur de surface de l'élément de surface, **en ce que** les deux composants sont disposés de manière rotative l'un par rapport à l'autre autour d'un axe spatial orienté de manière orthogonale par rapport à l'extension longitudinale de surface, qui coïncide avec au moins une direction d'action le long de laquelle au moins un composant est positionné de manière vibrante.

19. Dispositif selon la revendication 18, **caractérisé en ce que** l'élément de surface a une configuration en forme de bague ou de rondelle annulaire, **en ce que** le premier composant positionné de manière vibrante est relié par l'intermédiaire des n ≥ 2 points de contact qui sont répartis uniformément dans la direction longitudinale de l'élément de surface conçu en forme de bague ou de rondelle annulaire, solidement ou en un seul tenant avec l'élément de surface le long d'un bord circonférentiel coordonné à l'élément de surface.

20. Dispositif selon la revendication 18, **caractérisé en ce que** le deuxième composant est disposé par rapport au premier composant et à l'élément de surface conçu en forme de bague ou de rondelle annulaire de manière rotative autour d'au moins un axe spatial orienté de manière orthogonale par rapport à l'extension longitudinale de surface, et **en ce que** les n ≥ 2 moyens de contact coordonnés au deuxième composant sont respectivement en contact polissant ou déroulant avec le côté supérieur et le côté inférieur de surface de l'élément de surface.

21. Dispositif selon une des revendications 1 à 20, **caractérisé en ce que** le nombre de points de contact, sur lesquels le premier et le deuxième composant viennent en liaison opérationnelle avec l'élément de couplage, est respectivement identique.

22. Dispositif selon une des revendications 18 à 21, caractérisé en ce une structure porteuse est prévue, sur laquelle le deuxième composant est monté rotativement autour d'au moins une direction d'action et de manière fixe axialement par rapport à au moins une direction d'action et en ce que le premier composant est positionné de manière déviable bidirectionnellement par rapport à au moins une direction d'action et par l'intermédiaire de l'élément de surface relié au premier composant est appuyé au moyen du moyen de contact coordonné au deuxième composant.

23. Utilisation du dispositif selon une des revendications 1 à 22 comme amortisseur de vibrations, **caractérisé en ce que** le premier composant est couplé à un système amortissant les vibrations et le deuxième composant sert de masse d'amortisseur, qui est rotatif manuellement ou avec l'assistance d'un actionneur afin de régler une fréquence d'amortisseur par rapport au premier composant.

24. Utilisation du dispositif selon une des revendications 1 à 22 comme palier amortissant les vibrations ou isolant les vibrations entre deux corps, desquels au moins un corps est positionné de manière vibrante.

25. Utilisation selon la revendication 23 ou 24, **caractérisée en ce que** au moins deux dispositifs, un premier et un deuxième dispositif selon une des revendications 1 à 22 sont configurés et disposés de telle sorte que pour réaliser un couplage sériel des deux dispositifs les deux composants du premier dispositif sont couplés solidement avec le premier composant du deuxième dispositif, ou pour réaliser un couplage parallèle les deux dispositif du premier composant respectif et du deuxième composant respectif sont couplés solidement l'un à l'autre.
